# EUROPEAN PATENT APPLICATION

(11) **EP 3 477 627 A1**
(43) Date of publication of application: **01.05.2019**
(21) Application number: 17198675.5
(22) Date of filing: 26.10.2017
(51) Int. Cl.: G09G 3/34, G02F 1/1333, G02F 1/1335, G06F 1/20, H05K 7/20

(54) **DISPLAY DEVICE AND METHOD OF OPERATION**

(71) Applicant: Vestel Elektronik Sanayi ve Ticaret A.S., 45030 Manisa (TR)
(72) Inventor: ÇUBUKÇU,, Baran, 45030 Manisa (TR)
(74) Representative: Flint, Adam

(57) **Abstract**

A display device (10) has a display panel (12) having a plurality of light sources (14) for generating or illuminating an image. A determination is made that a region (34) of the panel (12) is susceptible to excessive heating. Localised cooling is applied to the region (34) of the panel (12) that is susceptible to excessive heating.

## Description

### Technical Field

The present disclosure relates to display device and a method of operating a display device.

### Background

Display devices generate heat during operation. Excessive heat can damage components of the display device, including for example light sources of the display device and electronic devices of the display device, such as a mainboard and individual components on the mainboard.

### Summary

According to a first aspect disclosed herein, there is provided a method of operating a display device, the display device having a panel comprising a plurality of light sources for generating or illuminating an image, the method comprising:
determining that a region of the panel is susceptible to excessive heating; and
applying localised cooling to the region of the panel that is susceptible to excessive heating.

This localised cooling of only the specific region or regions of the display panel that are susceptible to excessive heating means that the cooling can be more effective and efficient. For example, power is not wasted in attempting to cool regions of the display panel that are not actually hot or likely to become hot in use and therefore do not actually require cooling. What is regarded as "excessive" heating may be predetermined or may be a variable that can be set by a user. The ambient temperature may for example be a factor in determining that a region is susceptible to excessive heating.

In an example, the determining that a region of the panel is susceptible to excessive heating comprises:
analysing the image to determine the brightness of the image at a plurality of different regions of the image; and
determining that a region of the panel is susceptible to excessive heating if the brightness of the corresponding region of the image exceeds a threshold.

This recognises that regions that are particularly bright when the image is displayed are likely to become hottest when the image is displayed.

In an example, the brightness of a region of the image is the sum of brightness levels of the pixels in that region.

In an example, the analysing of the image takes place before the image is displayed. This enables the cooling measures to be put in place at the time that the image is actually displayed, or even just prior to the image being displayed as a pre-emptive measure (i.e. in advance) to prevent undue heating of the region occurring in the first place.

In an example, the applying localised cooling to the region of the panel that is susceptible to excessive heating comprises directing air at the region of the panel that is susceptible to excessive heating.

In an example, the air is blown by at least one air blower, the air blower being movable relative to the panel so as to be positionable to direct air at or over the region of the panel that is susceptible to excessive heating.

In an example, the air blower is arranged to move adjacent an edge of the panel. The edge may be a top or bottom edge of the panel or one or more side edges of the panel. There may be blowers along more than one edge of the panel.

In an example, the air is blown by at least one air blower through an air duct, the air duct having a plurality of openings arranged across the panel, the air duct having valves that are selectively operable to allow air to pass out of the air duct through an opening of the duct and towards a region of the panel that is susceptible to excessive heating and to prevent air passing through an opening towards other regions of the panel.

According to a second aspect disclosed herein, there is provided a display device, the display device comprising:
a panel comprising a plurality of light sources for generating or illuminating an image;
a processor configured to determine that a region of the panel is susceptible to excessive heating; and
a cooling arrangement in communication with the processor for applying localised cooling to a region of the panel that is determined to be susceptible to excessive heating.

In an example, the processor is configured to:
analyse an image to determine the brightness of the image to be displayed at a plurality of different regions of the image; and
determine that a region of the panel is susceptible to excessive heating if the brightness of the corresponding region of the image exceeds a threshold.

In an example, the processor is configured such that the brightness of a region of the image is the sum of brightness levels of the pixels in that region.

In an example, the processor is configured such that the analysing of the image takes place before the image is displayed.

In an example, the display device comprises an air blower for blowing air to be directed at the region of the panel that is susceptible to excessive heating.

In an example, the air blower is movable relative to the panel so as to be positionable to direct air at or over the region of the panel that is susceptible to excessive heating.

In an example, the display device comprises an air duct, the air duct having a plurality of openings arranged across the panel, the air duct having valves that are selectively operable to allow air to pass out of the air duct through an opening of the duct and towards a region of the panel that is susceptible to excessive heating and to prevent air passing through an opening towards other regions of the panel.

### Brief Description of the Drawings

To assist understanding of the present disclosure and to show how embodiments may be put into effect, reference is made by way of example to the accompanying drawings in which:
Figure 1 shows schematically a front view of a first example of a display device;
Figure 2 shows schematically a plan view from above of a second example of a display device; and
Figure 3 shows schematically a side view of a third example of a display device.

### Detailed Description

As mentioned and is well known, display devices generate heat during operation. Excessive heat can damage or affect the performance of components of the display device, including for example light sources of the display device and electronic devices of the display device, such as a mainboard and individual components on the mainboard. Various arrangements for cooling a display device are known. These typically include providing fans or air conditioning-type units to blow (cold) air across the whole display device or the light sources. Such use of fans or air conditioning-type units inevitably means that more power is consumed in powering the fans or air conditioning-type units. This is undesirable of itself and also can contribute to heating of the display device (because for example the fans or air conditioning-type units are inevitably close to the display device and so heat generated by the associated electric motors or air conditioning-type units, etc. in use can heat the display device directly or at least heat the environment in which the display device is located, resulting in heating of the display device).

Excessive heat is a particular problem with large display devices and display devices that are used outside, as in the case of for example so-called "signage" which may be used for displaying information, advertising, videos, etc. This is because the outside temperature can fluctuate over a wide range (particularly compared with indoor temperatures say) and also because of sunlight which may be directly incident on the display device.

In examples described herein, a determination is made that one or more regions of a display panel of a display device are susceptible to excessive heating, and localised cooling is applied to the region or regions that are susceptible to excessive heating. (By "susceptible" is meant that the region or regions are liable or prone to be subjected to excessive heating, especially in use when an image is actually being displayed.) This means that the cooling can be more effective and efficient, and for example power is not wasted in attempting to cool regions of the display panel that are not actually hot and do not actually require cooling.

A "region" for this purpose may be one pixel/light source (where there is for example a one-to-one correspondence between pixels in the image and light sources that generate or illuminate the image). In other examples, a "region" may be a number of neighbouring pixels/light sources. This may be for example a pixel/light source and its immediate closest neighbours, which may be neighbours in for example the horizontal and vertical directions of the display panel. In another example, a "region" may be all pixels/light sources in a column of the display panel or all pixels/light sources in a column and one or more neighbouring columns of the display panel.

In some examples, the image is analysed to determine the brightness of the image at a plurality of different regions of the image, and a region of the panel is determined to be susceptible to excessive heating if the brightness of the corresponding region of the image exceeds a threshold. This enables the cooling measures to be put in place at the time that the image is actually displayed, or even just prior to the image being displayed as a pre-emptive measure (i.e. in advance) to prevent undue heating of the region occurring in the first place.

The display device may be a display device as used in or with many different types of consumer apparatus, including for example television screens or monitors, computer displays or monitors, and displays for other computing devices, etc. The display device may be a display device as used in public environments in so-called "signage", for example, for displaying adverts or for information or entertainment that is of interest to a larger audience, including for outdoor use as well as indoor use.

The light sources may be for example light sources that are used in a backlit display screen. In a backlit display device, the lit backlight has plural light sources for emitting light. The light sources may be for example LEDs (light emitting diodes). In a "direct-lit" backlight, the light sources are arranged typically in a regular array on a reflector panel. The light sources emit light which is directed through a diffuser to a display panel. The diffuser helps to reduce glare that can otherwise occur. The display panel is formed of or includes a number of display elements (which are also often referred to as "pixels" as they typically correspond to pixels in the image that is displayed). The display elements are controllable so as to selectively transmit or prevent light from the light sources passing through the display panel. The display elements may be for example LCDs (liquid crystal display devices). In a display device having a direct-lit backlight, generally there is a light source for each display element.

In another example, the light sources may be for example light sources that are used in an edge-lit backlight. That is, there is at least one light source which is arranged at or towards an edge of the display device. Commonly, there are light sources arranged around each of the four edges of a display device that has an edge-lit backlight. The light sources are typically elongate and may be for example cold-cathode fluorescent lamps. In other examples, the light sources located at the edges are plural LEDs or other individual light sources arranged along the edges of the display device. The light sources may emit light into a light guide which is mounted in front of a reflector. The light guide directs the light through a diffuser into a display panel. Similarly to the direct-lit backlight example described above, the display panel may have plural individually controllable display elements. The display elements may be for example LCDs.

In other examples, the light sources may effectively generate the pixels directly, i.e. the light from the light source corresponds to the light required for that pixel and no backlight is required. (The light sources may for example generate coloured light or may generate white light which is then passed through controllable coloured filters so as to achieve different colours in the image.) Display devices that generate the pixels directly include for example display devices that use OLEDs (organic light emitting diodes) and plasma technology.

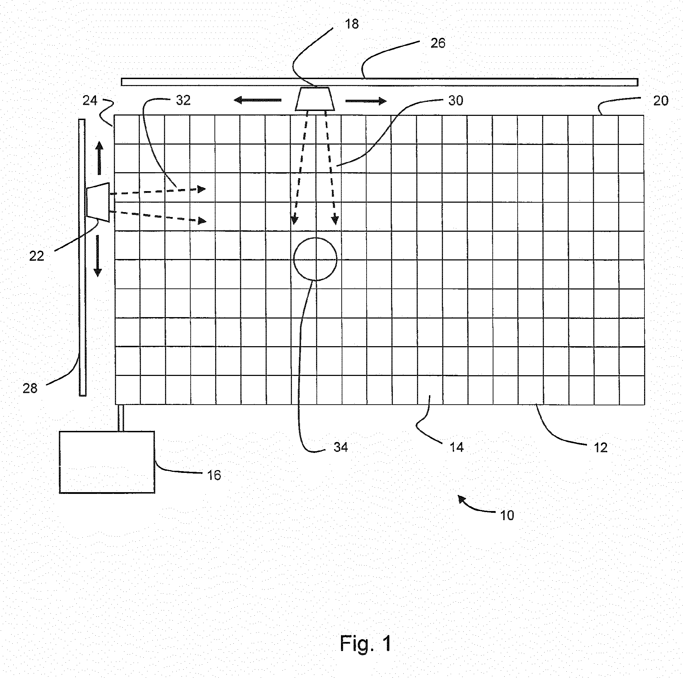

Referring now to Figure 1, there is shown schematically a first example of display device 10. The display device 10 has a display panel 12 having number of light sources 14 for generating an image (as in the case of for example display devices that use OLEDs or plasma technology as the light sources) or for illuminating an image (such as in the case of for example an LCD screen, which may for example use LEDs as the light sources). The light sources 14 are indicated schematically in Figure 1 as corresponding respectively to the pixels of the image that is displayed in use on the display panel 12. Only a small number of light sources/pixels 14 are shown in the figure, it being understood that the display panel 12 may have for example 1280x720 or 1920x1080 or 3840x2160, etc., etc. light sources/pixels 14.

The display device 10 has a processing unit 16. The processing unit 16 may be a separate device which is in communication with the display device 10. Alternatively, the processing unit 16 may be an integral part of the display device 10. The processing unit 16 may be for example the mainboard 16 or part of the mainboard 16 of the display device 10. The processing unit 16 has a processor, data storage, etc. (not shown).

The display device 10 has an arrangement for applying localised cooling to at least one region of the display panel 12 that is determined to be susceptible to excessive heating. In this example, the localised cooling arrangement includes at least one air blower which can be arranged to blow air at or over at least one region of the display panel 12 that is determined to be susceptible to excessive heating. The air blower may blow ambient air or air from for example an air conditioning unit (not shown) over at least one region of the display panel 12. The air blower of this example can be moved so as to direct air at or over the selected region or regions of the display panel 12. Other examples for directing the air at or over the selected region or regions of the display panel 12 are described further below.

In the example of Figure 1, a first air blower 18 is arranged adjacent the top (horizontal) edge 20 of the display panel 12 and a second air blower 22 is arranged adjacent the a side (vertical) edge 24 of the display panel 12. In other examples, there may be a single air blower, which may be arranged adjacent any of the edges of the display panel 12. In yet other examples, there may be for example air blowers arranged adjacent each horizontal and vertical edge of the display panel 12.

In the example of Figure 1, the first air blower 18 and the second air blower 22 are each movable along their respective edges 20, 24 of the display panel 12. This is indicated schematically in the figure by the first and second air blowers 18, 22 being mounted for sliding or rolling, etc. movement on respective tracks or rails 26, 28 which run parallel to the respective edges 20, 24 of the display panel 12. The movement of the first and second air blowers 18, 22 along the rails 26, 28 may be driven by for example one or more electric motors (not shown). The electric motors may be provided as part of the air blowers 18, 22 to power wheels or the like associated with the air blowers 18, 22 to drive the air blowers 18, 22 along the rails 26, 28. Alternatively, the electric motors may be associated with the rails 26, 28 and drive a pulley system or the like which is connected to the air blowers 18, 22 to drive the air blowers 18, 22 back and forth. Other arrangements for driving the movement of the air blowers 18, 22 along their respective edges 20, 24 of the display panel 12 are possible.

In use, the or each air blower 18, 22 may be driven along the respective edge 20, 24 of the display panel 12 to be located so as to be able to blow air at or over a particular region of the display panel 12 that is determined to be susceptible to excessive heating when an image is displayed on the display panel 12. The blowing of air is indicated schematically at 30, 32 for the respective air blowers 18, 22. For example, it may be determined that a region 34 broadly in the centre of the display panel 12 is susceptible to excessive heating when the image is displayed. The top are blower 18 is therefore driven to be located above that region 34 so as to be able to blow air towards and over that region 34. Likewise, in the case that there is a second blower 22 to the side, that second blower 22 can be driven to be located to the side of that region 34 so as to be able to blow air towards and over that region 34.

This can be flexible, especially in the case that there are a number of air blowers. For example, there may be one air blower along each edge of the display panel 12. In that case, having determined that a particular region of the display panel 12 is susceptible to excessive heating when an image is displayed, the air blower that is adjacent the edge of the display panel 12 that is closest to that region may be moved to be adjacent that region and operated to blow air at that region. As another example, air blowers along the two edges that are closest to a region that is susceptible to excessive heating may be moved to be adjacent that region and operated to blow air at that region. In other examples, two or more air blowers may be positioned adjacent one or more edges of the display device. For example, for physically large display devices 10, two air blowers may be provided along the (long) top horizontal edge of the display panel 12 and may be arranged to be independently controllable so as to be able to direct cooling air along two different columns of the display panel 12. Other operating modes and configurations are possible.

A number of techniques for determining that a region of the display panel 12 is susceptible to excessive heating are possible. In some examples, the image is analysed to determine the brightness of the image at a plurality of different regions of the image and a region of the display panel 12 is determined to be susceptible to excessive heating if the brightness of the corresponding region of the image exceeds a threshold. This recognises that regions of the display panel 12 that are particularly bright when the image is displayed are likely to become hottest when the image is displayed.

The analysing of the image may be performed, such as by the processor in the processing unit 16, prior to the image being displayed. An advantage of this is that the cooling measures for the display panel 12 can be put in place at the time that the image is actually displayed. Indeed, the cooling measures can be put in place just prior to the image being displayed as a pre-emptive measure (i.e. in advance) to prevent undue heating of the region of the display panel 12 occurring in the first place. The analysing of the image may be performed just prior to the image being displayed, that is in effect "on-the-fly" as part of the processing of the image by the processing unit 16. The analysing of the image may be performed some time prior to the image being displayed, such as some seconds or even minutes or more before the image is actually displayed. Either of these alternatives (just prior or some time in advance) is facilitated in the case that the image is derived from some local storage associated with the display device 10, such as a hard disk or solid state storage, as the image data is readily available to the processing unit 16 for analysis at any convenient time prior to the image being displayed. Nevertheless, either of these alternatives is possible even in the case that the image data is effectively obtained on-the-fly, such as being delivered over some network connection or the like to the display device 10, such as by streaming.

In an example of the image analysis, the brightness levels for pixels of the image may be scrutinised by the processing unit 16. If a brightness level for a pixel exceeds some threshold, that may be regarded as a determination that the corresponding region of the display panel 12 is susceptible to excessive heating such that the cooling measures can be put in place to cool that region of the display panel 12, at the time that the image is display or just prior as discussed above.

Carrying out this analysis on a pixel-by-pixel basis may be burdensome for the processing unit 16 and may in particular not be possible if the image analysis is being carried out just prior to the image being displayed, especially if the image is being streamed to the display device 10 for example. In any event, carrying out this analysis on a pixel-by-pixel basis may not be necessary in all cases. The image analysis to determine brightness levels of pixels may therefore be carried out on groups of pixels. A number of variations of this are possible. For example, the image analysis may be carried out on regions of the image where a "region" may be a number of neighbouring pixels. This may be for example a pixel and its immediate closest neighbours, which may be neighbours in for example the horizontal and vertical directions of the display panel; in that case, the image analysis may be carried out on every other pixel or every third pixel in the horizontal and vertical directions. In another example, a "region" may be for example a pixel, its immediate closest neighbours and the next closest neighbours; in that case, the image analysis may be carried out on every third pixel or every fourth pixel in the horizontal and vertical directions. In another example, a "region" may be all pixels in a column of the display panel or all pixels in a column and one or more neighbouring columns of the display panel. Other variations along these lines will be apparent.

Moreover, it is common in display devices for a "pixel" of the display device (i.e. the light source or the controllable display element, depending on the display technology as discussed above) to be formed of red, green and blue "sub-pixels". In such a case, the brightness level of the pixel as used herein may be the sum of the individual brightness levels of the three RGB sub-pixels.

To illustrate this, a simplistic specific example will be given for a display device having an array of 9x9 light sources corresponding to the display panel having a resolution of 9x9 and the image being 9x9 pixels. (It is emphasised that this is a simple example for illustrative purposes, and that, as mentioned, display devices typically have very many more pixels/light sources.) In this example, the brightness levels for all of the pixels in each column of the image are summed, and, if that sum exceeds a threshold, it is determined that that column is susceptible to excess heating. For example, the table below represents the 9 columns of 9 rows of pixels, with the brightness level of each pixel being indicated for each cell of the table, and the sum of the brightness levels for the pixels in each column is shown at the bottom:

| | | | | | | | | |
|---|---|---|---|---|---|---|---|---|
| 1 | 2 | 4 | 3 | 3 | 2 | 1 | 5 | 6 |
| 0 | 1 | 1 | 4 | 2 | 1 | 1 | 6 | 3 |
| 2 | 0 | 0 | 3 | 2 | 1 | 3 | 4 | 4 |
| 2 | 1 | 3 | 2 | 1 | 3 | 5 | 5 | 6 |
| 1 | 0 | 1 | 0 | 1 | 2 | 4 | 6 | 6 |
| 1 | 1 | 3 | 1 | 2 | 1 | 3 | 5 | 7 |
| 0 | 1 | 2 | 1 | 2 | 2 | 3 | 4 | 4 |
| 1 | 2 | 2 | 3 | 2 | 1 | 4 | 5 | 6 |
| 0 | 1 | 0 | 1 | 1 | 2 | 3 | 4 | 5 |
| **8** | **9** | **16** | **18** | **16** | **15** | **27** | **44** | **47** |

In this case, the threshold may be set at a summed brightness level of say 40, such that the two rightmost columns are determined to be susceptible to excessive heating when the image is displayed.

The table above relates to the case where brightness levels for all of the pixels in each column of the image are summed. A similar process can be applied where the brightness levels for all nearest neighbours for a pixel are summed, or the brightness levels for the nearest and next-nearest neighbours are summed, etc.

In a variant, the ambient temperature for the display device 10 may be taken into account when determining whether a region of the display panel 12 is susceptible to excessive heating. In particular, if the ambient temperature is low, then a higher threshold may be set as the display device 10 is in general more able to lose heat to the environment. On the other hand, if the ambient temperature is high, then a lower threshold may be set as the display device 10 is in general less able to lose heat to the environment.

As an example to illustrate this and referring to the table above, if the ambient temperature is above say 30°C but below 35°C, then a sum of the brightness levels above 45 may be regarded as risky so the threshold may be set at 45 for this ambient temperature; whereas if the ambient temperature is above say 35°C, then a sum of the brightness levels above 40 may be regarded as risky so the threshold may be set at 40 for this ambient temperature. In this example therefore, if the ambient temperature is say 33°C degree, then only the rightmost column is determined to be at risk of excessive heating, whereas if the ambient temperature is say 36°C degree, then the two rightmost columns are determined to be at risk of excessive heating.

As another variant, the amount of air that is blown by the one or more air blowers 18, 22 may be different, depending on one or more factors. For example, in the case that thresholds for brightness levels are set, which may be thresholds for sums of brightness levels for a number of pixels, then a number of different thresholds may be set. In the case that the brightness level for a pixel or the sum of brightness levels for a number of pixels exceeds the greatest threshold, then the air blower(s) may be set to blow air at a maximum rate; if the brightness level for a pixel or the sum of brightness levels for a number of pixels is between the greatest and the lowest threshold, then the air blower(s) may be set to blow air at a minimum rate. Further brightness thresholds and corresponding intermediate rates of air flow for the blowers may be used.

Alternatively or additionally, if a particular region of the display panel 12 is determined to be susceptible to excessive heating when the image is displayed and that region is close to an air blower, then a low rate of air flow may be sufficient; whereas correspondingly, if a region 12 is determined to be susceptible to excessive heating when the image is displayed and that region is relatively far from an air blower, then a high rate of air flow from the air blower may be required. As a specific example, if there is a single air blower 18 along the top edge of the display panel 12 and the region identified as being at risk of excessive heating is near the top edge of the display panel 12, then the air blower 18 may be controlled to blow air at a low rate; whereas if the region identified as being at risk of excessive heating is near the bottom edge of the display panel 12, then the air blower 18 may be controlled to blow air at a high rate so that the air can reach that region.

In addition, if there are plural air blowers 12 and one of the plural air blowers 12 is broken, then the other air blower or blowers 12 can be arranged to take responsibility for cooling down the places at risk of excessive heating by increasing their air flow rates if needed in any case.

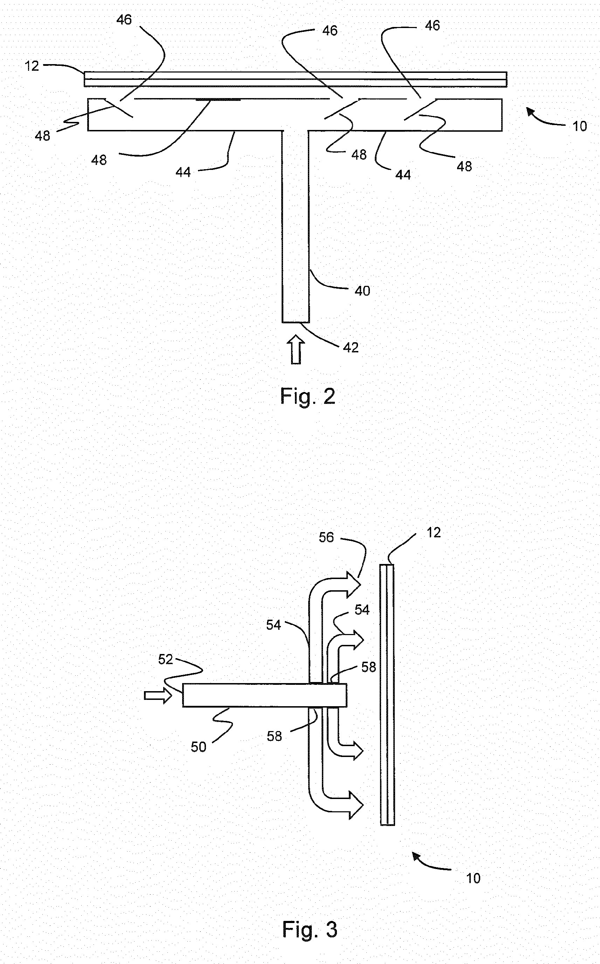

In the specific examples described above, one or more controllably movable air blowers are provided to selectively blow at the region or regions of the display panel that are determined to be susceptible to excessive heating when an image is displayed. Other examples of arrangements for directing air at selected local regions of the display panel will be described with reference to Figures 2 and 3. In each of these, the method for determining which region or regions of the display panel are susceptible to excessive heating, and therefore to which localised cooling should be applied, may be in accordance with any of the examples described above and will therefore not be further described. Moreover, the display devices themselves may be in accordance with any of the examples described above and will therefore also not be further described.

Referring first to Figure 2, there is shown a schematic plan view from above of a display device 10. In this example, the cooling arrangement is in the form of one or more inlet pipes or ducts 40 into which air can be introduced through an inlet 42. The or each inlet duct 40 then feeds incoming air through one or more outlet pipes or ducts 44 that are arrayed across the rear of the display device 10 or within the display device 10 itself and to the rear of the display panel 12. The outlet duct or ducts 44 have plural outlets 46 which may be arrayed in the form of a grid across the rear of the display panel 12 or display device 10 as the case may be.

A valve 48 is provided at each outlet 46 and can be operated to allow or prevent air exiting the outlet duct 44 through the outlet 46. The valves 48 are indicated as doors in Figure 2 which can be opened and closed to open and close the outlet 46, though other valve arrangements may be used. The valves 48 or doors or the like may be for example MEMS (microelectromechanical systems) devices, which helps to keep down power consumption and also facilitates rapid operation of the valves 48. Opening and closing of the valves 48 may be under control of a processing unit, like the processing unit 16 of the example of Figure 1, which has analysed the image to determine the region(s) of the display panel 12 that may be liable to overheat.

In this example, when it is determined that a particular region of the display panel 12 is susceptible to excessive heating when an image is displayed, the corresponding valve 48 is opened to allow air to be blown out through the corresponding outlet 46 to blow over that region. If plural regions are identified as being at risk of excessive heating, the corresponding plural valves 48 may be opened. The rate of air flow through the inlet 42 can also be controlled by checking how many valves 48 are opened via the processor 16 such that, if for example more valves 48 are opened, then the rate of air flow is increased and vice versa.

Figure 3 shows schematically a side view of a third example of a display device 10. In this example, a single inlet pipe or duct 50 has an inlet 52 through which air can be introduced. The inlet duct 50 feeds a number of outlet pipes or ducts 54 which have outlets 56 which are arrayed in the form of a grid across the rear of the display panel 12 or display device 10 as the case may be. In this example, valves 58 are provided at each junction between the inlet duct 50 and the outlet ducts 54. The valves 58 can be selectively opened, again under processor control, to allow air to enter the corresponding outlet duct 54 and blow over the region of the display panel 12 that has been identified as being at risk of excessive heating. The valves 58 may be MEMS devices or some other form of valve. Again, the rate of air flow into the inlet 52 may be controlled according to the number of valves 58 that are open.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to data storage for storing data. This may be provided by a single device or by plural devices. Suitable devices include for example a hard disk and non-volatile semiconductor memory.

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A method of operating a display device, the display device having a panel comprising a plurality of light sources for generating or illuminating an image, the method comprising:
determining that a region of the panel is susceptible to excessive heating; and
applying localised cooling to the region of the panel that is susceptible to excessive heating.

2. A method according to claim 1, wherein the determining that a region of the panel is susceptible to excessive heating comprises:
analysing the image to determine the brightness of the image at a plurality of different regions of the image; and
determining that a region of the panel is susceptible to excessive heating if the brightness of the corresponding region of the image exceeds a threshold.

3. A method according to claim 2, wherein the brightness of a region of the image is the sum of brightness levels of the pixels in that region.

4. A method according to claim 2 or claim 3, wherein the analysing of the image takes place before the image is displayed.

5. A method according to any of claims 1 to 4, wherein the applying localised cooling to the region of the panel that is susceptible to excessive heating comprises directing air at the region of the panel that is susceptible to excessive heating.

6. A method according to claim 5, wherein the air is blown by at least one air blower, the air blower being movable relative to the panel so as to be positionable to direct air at or over the region of the panel that is susceptible to excessive heating.

7. A method according to claim 6, wherein the air blower is arranged to move adjacent an edge of the panel.

8. A method according to any of claims 5 to 7, wherein the air is blown by at least one air blower through an air duct, the air duct having a plurality of openings arranged across the panel, the air duct having valves that are selectively operable to allow air to pass out of the air duct through an opening of the duct and towards a region of the panel that is susceptible to excessive heating and to prevent air passing through an opening towards other regions of the panel.

9. A display device, the display device comprising:
a panel comprising a plurality of light sources for generating or illuminating an image;
a processor configured to determine that a region of the panel is susceptible to excessive heating; and
a cooling arrangement in communication with the processor for applying localised cooling to a region of the panel that is determined to be susceptible to excessive heating.

10. A display device according to claim 9, wherein the processor is configured to:
analyse an image to determine the brightness of the image to be displayed at a plurality of different regions of the image; and
determine that a region of the panel is susceptible to excessive heating if the brightness of the corresponding region of the image exceeds a threshold.

11. A display device according to claim 10, wherein the processor is configured such that the brightness of a region of the image is the sum of brightness levels of the pixels in that region.

12. A display device according to claim 10 or claim 11, wherein the processor is configured such that the analysing of the image takes place before the image is displayed.

13. A display device according to any of claims 9 to 12, comprising an air blower for blowing air to be directed at the region of the panel that is susceptible to excessive heating.

14. A display device according to claim 13, wherein the air blower is movable relative to the panel so as to be positionable to direct air at or over the region of the panel that is susceptible to excessive heating.

15. A display device according to claim 13 or claim 14, comprising an air duct, the air duct having a plurality of openings arranged across the panel, the air duct having valves that are selectively operable to allow air to pass out of the air duct through an opening of the duct and towards a region of the panel that is susceptible to excessive heating and to prevent air passing through an opening towards other regions of the panel.
